# EUROPÄISCHE PATENTANMELDUNG

(11) **EP 1 371 342 A1**
(43) Veröffentlichungstag der Anmeldung: **17.12.2003**
(21) Anmeldenummer: 03011497.9
(22) Anmeldetag: 21.05.2003
(51) Int. Cl.: A61C 8/00

(54) **Knochenimplantat**

(30) Priorität: 12.06.2002 DE 20209170 U
(71) Anmelder: Dinkelacker, Wolfgang, Dr. med. dent., 71063 Sindelfingen (DE)
(72) Erfinder: Dinkelacker, Wolfgang, Dr. med. dent., 71063 Sindelfingen (DE)
(74) Vertreter: Kindermann, Manfred

(57) **Zusammenfassung**

Ein Knochenimplantat, insbesondere ein Zahnimplantat, weist einen Implantatkörper (1) auf, der mit einem Aufbaukörper (3) verbunden ist. Auf den Implantatkörper oder auf den Aufbaukörper wird eine Metallschicht (18) aufgebracht, die sich über wenigstens einen Teil des Kontaktbereichs zwischen Implantatkörper und Aufbaukörper erstreckt und die eine geringere Härte als der Aufbaukörper und/oder der Implantatkörper (1) im Kontaktbereich aufweist. Durch die Metallschicht wird eine innige, fugenlose und dauerhafte Verbindung zwischen Implantatkörper und Aufbaukörper sichergestellt.

## Beschreibung

### Bereich der Erfindung

Die Erfindung bezieht sich auf ein Knochenimplantat, insbesondere Zahnimplantat, mit einem Implantatkörper und einem Aufbaukörper und mit einem Kontaktbereich zwischen Implantat- und Aufbaukörper, in dem die Form von Implantatund Aufbaukörper aneinander angepasst sind. Die Erfindung betrifft auch die ein Verfahren zur Herstellung eines Knochenimplantats.

### Stand der Technik

Bekannte enossale Zahnimplantaten bestehen aus einem Implantatkörper, der in den Knochen eingesetzt wird und auf den nach Abschluss der Einheilphase ein Aufbaukörper aufgesetzt wird, der als Träger für einen Zahnersatz wie z.B. eine Krone dient. Der Implantatkörper weist eine axiale Gewindebohrung auf zur Aufnahme eines Schraubenbolzens zur Befestigung des eines Aufbaukörpers. Der Implantatkörpers kann so geformt sein, dass er an den Verlauf des ihn umgebenden Knochens angepasst ist. Hierzu weist der Kopf des Implantatkörpers eine zweiseitige Verjüngung auf, die durch beiderseits der Gewindebohrung und quer zur Zahnreihe verlaufende Abschrägungen gebildet wird. Durch diese Form des Implantats wird eine Anpassung an die Niveauunterschiede zwischen den Buccal- und Lingualhöhen und der Approximalhöhe des Knochenverlaufs erreicht und eine natürliche Oberkante des Kieferknochens nachgebildet. Ein derartiges Zahnimplantat ist in der EP 0 868 889 offenbart.

Bei Implantaten ist der Aufbaukörper ist die Form des Aufbaukörpers im Bereich des Kontakts mit dem Implantatkörper, an dessen Form anzupassen. Auch bei genauester Ausführung dieser Anpassung kann es zu einer Spaltenbildung zwischen Implantatkörper und Aufbaukörper kommen. In die Spalten können sich Bakterien einlagern einlagern, die Herde für Infektionen und Entzündungen bilden. Gleiches gilt für jede Form von mehrteiligen Knochenimplantaten, deren Teile vor oder nach dem Einsetzen in den Knochen miteinander verbunden werden.

Es ist bei Kieferimplantaten bekannt, zwischen Implantatkörper und Aufbaukörper einen Dichtring einzufügen, der Silikon oder einem anderen Kunststoff besteht (DE 44 05 797 und DE 198 15 719). Bei derartigen Dichtringen besteht die Gefahr, dass Material, aus dem die Ringe bestehen, im Laufe der Zeit durch die Mundflüssigkeit angegriffen wird und ausgewechselt werden muss. Um dem zu begegnen ist es auch bekannt, als Dichtring eine Scheibe aus einer Feingold zu verwenden (DE-A 196 47 490). Des weiteren ist es bekannt, ein zusammengesetztes Kieferimplantat, bei dem der eine Teil des Implantats aus Glas und der andere Teil aus Metall besteht, mit einer Bindeschicht aus Glas auszustatten, durch die beide Teile miteinander verbunden werden (DE-A 41 31 212). Im Gebrauch des Implantat können durch Druckbelastung und geringfügige Deformierungen der Implantatteile Risse oder Brüche in der Bindeschicht auftreten.

### Zusammenfassung der Erfindung

Der Erfindung liegt die Aufgabe zugrunde, diesen Nachteilen entgegenzuwirken und mehrteilige Knochenimplantate so auszubilden, dass in dem das Implantat umgebenden Knochengewebe vom Implantat ausgehende Infektionen und Entzündungen auf Dauer vermieden werden.

Das erfindungsgemäße Knochenimplantat, wie es in den Patentansprüchen definiert ist, umfasst einen Implantatkörper und einem Aufbaukörper, die in einem Kontaktbereich aneinander angepasst sind. Auf dem Implantatkörper oder auf dem Aufbaukörper ist im Kontaktbereich eine Metallschicht angeordnet, die eine geringere Härte als der Aufbaukörper und/oder der Implantatkörper im Kontaktbereich aufweist. Das erfindungsgemäße Implantat kann so ausgebildet sein, dass auf dem Implantatkörper und auf dem Aufbaukörper im Kontaktbereich je eine Metallschicht angeordnet ist. Die Metallschicht erstreckt sich über wenigstens einen Teil des Kontaktbereichs zwischen Implantatkörper und Aufbaukörper und ist vorzugsweise in einer sich in Umfangsrichtung ausdehnenden Zone des Kontaktbereiches angeordnet. Sie stellt eine innige, fugenlose, widerstandsfähige und dauerhafte Verbindung zwischen diesen beiden Teilen sicher. Die Erfindung eignet sich insbesondere für Implantate, bei denen der Impantatkörper zur Anpassung an den Verlauf des ihn umgebenden Knochens profiliert ausgebildet ist.

Die Metallschicht wird vorzugsweise durch Sputtern oder galvanische Abscheidung hergestellt. Die hierbei zur Anwendung kommenden Materialien können Titan, Titanlegierungen, Gold oder Goldlegierungen sein.

Gegenstand der Erfindung ist auch ein in den Ansprüchen definiertes Verfahren zur Herstellung eines Knochenimplantats.

### Beschreibung der Zeichnungen

Nachfolgend sind Ausführungsbeispiele der Erfindung anhand von Zeichnungen beschrieben. Es zeigen:

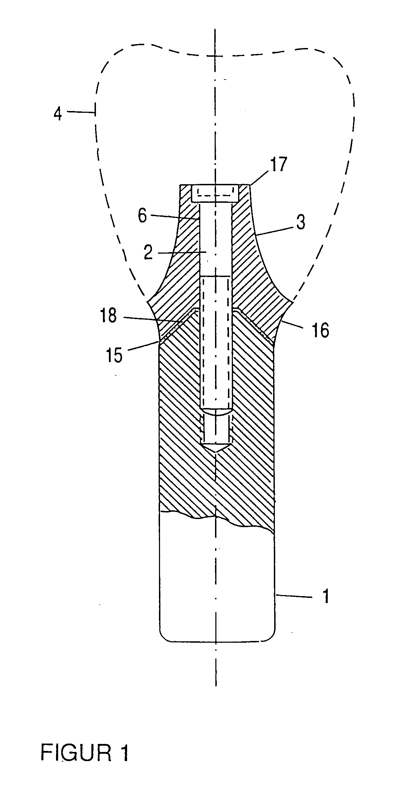

- Figur 1: ein Zahnimplantats gemäß der Erfindung in einer Schnittdarstellung mit entlang der Längsachse des Implantats verlaufender Schnittlinie;

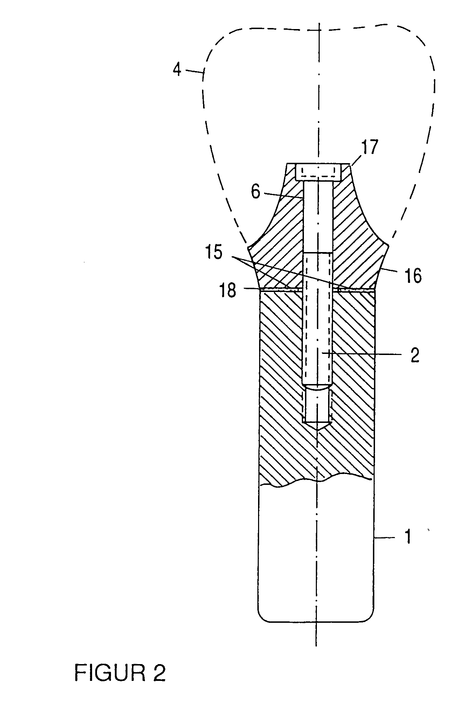

- Figur 2: eine weitere Schnittdarstellung des Zahnimplantats von Figur 1 mit einem gegenüber der Figur 1 um 90 Grad versetzten Verlauf der Schnittlinie;
- Figur 3: eine Draufsicht auf einen Implantatkörper, wie er bei dem Zahnimplantats von Figur 1 und 2 Verwendung findet; und
- Figur 4: eine vergrößerte Schnittdarstellung des Kontaktbereiches zwischen dem Implantatkörper 1 und dem Aufbaukörper 3
- Figur 5: eine Schnittdarstellung eines Implantatkörpers einer anderen Ausführungsform eines Zahnimplantats gemäß der Erfindung.

### Detaillierte Beschreibung des dargestellten Ausführungsbeispiels

Das dargestellte Ausführungsbeispiel zeigt ein Zahnimplantat mit einem Implantatkörper 1, der durch eine Schraube 2 mit einem als Träger für einen Zahnersatz 4 dienenden Aufbaukörper 3 verbunden ist. Der Aufbaukörper 3 besitzt zentrale Bohrung 6, durch die die Schraube 2 geführt ist, die in eine zentrale Gewindebohrung des Implantatkörpers 1 eingreift.

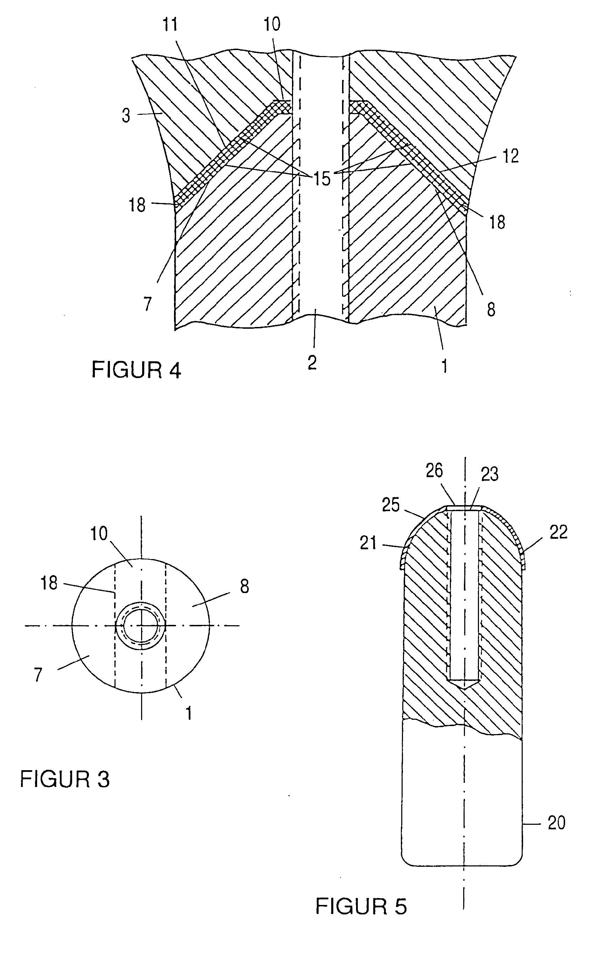

Der Implantatkörper 1 ist als Zylinder ausgebildet, dessen dem Aufbaukörper 3 zugewandtes Ende Abschrägungen 7, 8 aufweist (Figur 4). Die Abschrägungen 7, 8 gehen von einer Kopffläche 10 aus, die das dem Aufbaukörper 3 zugewandte Ende des Implantatkörpers 1 bildet. Sie sind in Bezug auf die Längsachse des Implantats auf einander gegenüberliegenden Seiten des Implantatkörpers 1 angeordnet. Der Aufbaukörper 3 ist komplementär an die Form des Implantatkörpers 1 angepasst. Hierzu ist der Aufbaukörper 3 hohl und weist in diesem hohlen Bereich schräge Flächen 11, 12 auf, die den Abschrägungen 7, 8 am Kopf des Implantatkörpers 1 entsprechen. Zwischen den Flächen 11, 12 befindet sich eine Grundfläche, die an die Kopffläche 10 des Implantatkörper 1 angepasst ist. Von seinem unteren Ende ausgehend vergrößert sich das Umfangsprofil des Aufbaukörpers 3 zunächst in einer leicht gekrümmten Umfangslinie 16 und fällt dann bogenförmig ab bis zu einem Durchmesser 17, der entsprechend dem jeweils aufzubringenden Zahnersatz wie z.B. eine Krone 4 bemessen ist.

Implantat- und Aufbaukörper 1, 3 des dargestellten Ausführungsbeispiels sind rotationssymmetrisch ausgebildet. Ein Implantat dieser Art ist in der EP-A 0 868 889 offenbart. Abweichend hiervon kann das Implantat oder dessen Teile eine unrunde Form aufweisen. So kann der Aufbaukörper 3 einen ellipsenartigen Querschnitt besitzen, wie es in der EP-A 1 205 158 dargestellt ist. Bei derartigen Ausführungen entspricht der Kontaktbereich der Form von Implantat- und Aufbaukörper 1, 3.

Implantat- und Aufbaukörper 1, 3 bestehen aus einem Material, das mit der Knochensubstanz des menschlichen Körpers gut verträglich ist und auch die erforderliche Härte aufweist. Dies kann eine Goldlegierung, Titan oder eine Titanlegierung, Keramik oder eine Keramikverbindung wie Goldkeramik sein.

Der Kontaktbereich 15 zwischen Implantat- und Aufbaukörper 1, 3 wird weitgehend fugenlos hergestellt. In Abhängigkeit von den zur Anwendung kommenden Produktionsverfahren können dennoch Spalten in der Größe von wenigen Mikrometern auftreten. In solchen Spalten können sich Bakterien einlagern, die Herde für Infektionen und Entzündungen bilden. Dies wird durch eine Abdichtung verhindert, die im Kontaktbereich 15 zwischen Implantatkörper 1 und Aufbaukörper 3 angebracht wird.

Die Abdichtung besteht vorzugsweise aus einer dünnen Schicht 18 eines Materials, das durch Oberflächenbehandlung von wenigstens einem der Implantatteile hergestellt wird und wenigstens einen Teil des Kontaktbereiches 15 erstreckt. Im dargestellten Ausführungsbeispiel überdeckt die Abdichtschicht 18 den gesamten Kontaktbereich 15 mit Ausnahme der Bohrung zur Aufnahme der Schraube 2 (Figuren 3 und 4). Abweichend davon kann die Abdichtschicht 18 so ausgebildet sein, dass sie in einer sich in Umfangsrichtung erstreckenden Zone des Kontaktbereichs 15 angeordnet ist. So kann die Abdichtschicht auf einen peripheren Teil des Kontaktbereichs 15 beschränkt sein, der sich ringförmig um das Zentrum von Implantat- und Aufbaukörper 1, 3 erstreckt.

Die Dicke der Abdichtschicht 18 kann zwischen 0,5 Mikrometer und 1 Millimeter liegen, vorzugsweise im Bereich von 10 bis 300 Mikrometern. Die Abdichtung 18 kann aus einer Titanschicht bestehen, die durch Sputtern auf die Flächenteile 11 und 12 im Kontaktbereich 15 des Aufbaukörpers 3 und/oder auf die entsprechenden Gegenflächen 7, 8, 10 des Implantatkörpers 1 aufgebracht wird. Anstelle von Titan können andere Metalle zu Herstellung der Schicht 18 durch Anwendung der Sputter-Technik verwendet werden. Die Schicht kann auch durch Aufdampfen oder galvanotechnisch aufgebracht werden. So kann auf wenigstens einen Teil der Oberfläche des Implantatkörpers 1 und/oder des Aufbaukörpers 3 eine Schicht aus Gold oder einem anderen Metall galvanisch aufgebracht werden.

Alternativ zur oben beschriebenen Ausführung kann die Abdichtschicht 18 kann aus einer Folie bestehen, die im Kontaktbereich 15 zwischen Implantat- und Aufbaukörpers 1, 3 eingelegt wird und sich über wenigstens einen ringförmigen Teil des Kontaktbereichs 18 erstreckt, wie oben beschrieben wurde. Die Folie weist im Bereich des Schraubendurchgangs ein Loch auf. Ihre Dicke liegt unterhalb 500 Mikrometern, vorzugsweise zwischen 10 und 300 Mikrometern. Es kann es sich um eine Titanfolie oder um Blattgold handeln. Des weiteren kann die Abdichtschicht auch durch Aufbringen einer Silikonbeschichtung hergestellt werden, die vor dem Verbinden der Implantatteile auf den Kontaktbereich hergestellt wird.

Für Implantate mit gerundeten oder gewölbten Kontaktbereich können vorgeformte Folien als Abdichtschichten verwendet werden. Die Figur 5 zeigt einen Implantkörper 20, bei dem die Abschrägungen als konvex gewölbte Bereiche 21, 22 ausgebildet sind, die in Bezug auf die Längsachse des Implantats auf einander gegenüberliegenden Seiten des Implantkörper 20 angeordnet sind. Ein nichtgezeigter Aufbaukörper ist komplementär zu den Bereichen 21, 22 und einer Kopffläche 23 ausgebildet, wie dies für den Aufbaukörper 3 beschrieben wurde. Eine Folie 25 wird entsprechend der Form des Kopfes von Implantkörper 20 vorgeformt. Sie weist einen zentralen Durchbruch 26 für die nicht dargestellte Befestigungsschraube auf. Die Folie wird in dieser Form zwischen Implantkörper 20 und Aufbaukörper gebracht, bevor beide Teile durch die Befestigungsschraube gegeneinander gepresst werden. Auf diese Weise wird eine Faltenbildung in der Folie beim Einsetzen des Aufbaukörpers vermieden.

Während die Erfindung anhand einer bevorzugten Ausführungsform beschrieben wurde, können Abwandlungen und andere Ausführungsformen realisiert werden, ohne den durch die Ansprüche definierten Bereich der Erfindung zu verlassen. So ist die Erfindung bei Implantaten anwendbar, die aus mehr als zwei Teilen bestehen, um deren Kontaktbereiche gegen die Ausbildung von Bakterienherden zu schützen. Die Erfindung ist auch nicht auf Zahnimplantate beschränkt. Sie ist bei allen Knochenimplantaten anwendbar, die aus zwei oder mehr Teilen bestehen, die eine fugen- oder spaltenlose Verbindung erfordern.

## Patentansprüche

1. Knochenimplantat, insbesondere Zahnimplantat, mit einem Implantatkörper (1) und einem Aufbaukörper (3) und mit einem Kontaktbereich zwischen Implantat- und Aufbaukörper, in dem die Form von Implantat- und Aufbaukörper aneinander angepasst sind und in dem ein Dichtungsmittel angeordnet ist, **gekennzeichnet dadurch, dass** auf dem Implantatkörper (1) oder auf dem Aufbaukörper (3) im Kontaktbereich (15) eine Metallschicht (18) angeordnet ist, die eine geringere Härte als der Aufbaukörper und/oder der Implantatkörper (1) im Kontaktbereich aufweist.

2. Implantat nach Anspruch 1, **dadurch gekennzeichnet, dass** auf dem Implantatkörper (1) und auf dem Aufbaukörper (3) im Kontaktbereich (15) je eine Metallschicht angeordnet ist.

3. Implantat nach Anspruch 1 oder 2, **dadurch gekennzeichnet, dass** die Metallschicht (18) in einer sich in Umfangsrichtung erstreckenden Zone des Kontaktbereichs (15) angeordnet ist.

4. Implantat nach einem der Ansprüche 1 bis 3, **dadurch gekennzeichnet, dass** die Metallschicht eine durch Sputtern hergestellte Metallschicht umfasst.

5. Implantat nach Anspruch 4, **dadurch gekennzeichnet, dass** die Metallschicht eine durch Sputtern hergestellte Schicht aus Titan oder einer Titanlegierung umfasst.

6. Implantat nach Anspruch 4, **dadurch gekennzeichnet, dass** die Metallschicht eine durch Sputtern hergestellte Schicht aus Gold umfasst.

7. Implantat nach einem der Ansprüche 1 bis 3, **dadurch gekennzeichnet, dass** die Metallschicht eine durch galvanische Abscheidung hergestellte Metallschicht umfasst.

8. Implantat nach Anspruch 7, **dadurch gekennzeichnet, dass** die Metallschicht aus galvanisch abgeschiedenem Gold besteht.

9. Implantat nach einem der Ansprüche 1 bis 4, **dadurch gekennzeichnet, dass** die Metallschicht eine durch Aufdampfen hergestellte Metallschicht umfasst.

10. Implantat nach einem der Ansprüche 1 bis 9, **dadurch gekennzeichnet, dass** die Metallschicht (18) eine Dicke zwischen 0,5 Mikrometern und 1 mm aufweist.

11. Implantat nach einem der Ansprüche 1 bis 10, **dadurch gekennzeichnet, dass** der Implantatkörper (1) und der Aufbaukörper (3) im Kontaktbereich (15) einen rotationssymmetrischen Querschnitt aufweisen und dass die Metallschicht (18) wenigstens eine ringförmige Randzone des Kontaktbereichs überdeckt, die parallel zu dessen Umfang verläuft.

12. Implantat nach einem der Ansprüche 1 bis 10, **dadurch gekennzeichnet, dass** der Implantatkörper (1) und der Aufbaukörper (3) im Kontaktbereich (15) einen unrunden Querschnitt aufweisen und dass die Metallschicht (18) wenigstens eine Randzone des Kontaktbereichs überdeckt, die parallel zu dessen Umfangslinie verläuft.

13. Verfahren zum Herstellen eines Knochenimplantats, insbesondere Zahnimplantats, mit einem Implantatkörper (1) und einem Aufbaukörper (3) und mit einem Kontaktbereich (15) zwischen Implantat- und Aufbaukörper, in dem die Form von Implantat- und Aufbaukörper aneinander angepasst sind und in dem ein Dichtungsmittel angeordnet ist, **dadurch gekennzeichnet, dass** in dem Kontaktbereich (15) auf den Implantatkörper (1) oder auf den Aufbaukörper (3) eine Metallschicht (18) aufgebracht wird, die eine geringere Härte als der Aufbaukörper (3) und der Implantatkörper (1) im Kontaktbereich (15) aufweist.

14. Implantat nach Anspruch 13, **dadurch gekennzeichnet, dass** auf dem Implantatkörper (1) und auf dem Aufbaukörper (3) im Kontaktbereich (15) je eine Metallschicht angeordnet wird.

15. Verfahren nach Anspruch 13 oder 14, **dadurch gekennzeichnet, dass** die Metallschicht (18) in einer sich ringförmig in Umfangsrichtung erstreckenden Zone des Kontaktbereichs (15) aufgebracht wird.

16. Verfahren nach einem der Ansprüche 13 bis 15, **dadurch gekennzeichnet, dass** die Metallschicht (18) durch Sputtern hergestellt wird.

17. Verfahren nach Anspruch 16, **dadurch gekennzeichnet, dass** die Metallschicht (18) durch Sputtern von Titan oder einer Titanlegierung hergestellt wird.

18. Verfahren nach einem der Ansprüche 13 bis 15, **dadurch gekennzeichnet, dass** die Metallschicht durch galvanische Abscheidung hergestellt wird.

19. Verfahren nach Anspruch 18, **dadurch gekennzeichnet, dass** die Abdichtschicht durch galvanische Abscheidung von Gold hergestellt wird.

20. Verfahren nach einem der Ansprüche 13 bis 15, **dadurch gekennzeichnet, dass** die Metallschicht durch Aufdampfen hergestellt wird.

21. Verfahren nach einem der Ansprüche 13 bis 20, **dadurch gekennzeichnet, dass** die Metallschicht eine Dicke in der Größenordnung von 0,5 Mikrometern und 1 mm aufweist.
